# DEMANDE DE BREVET EUROPEEN

(11) **EP 1 808 627 A1**
(43) Date de publication de la demande: **18.07.2007**
(21) Numéro de dépôt: 06100262.2
(22) Date de dépôt: 12.01.2006
(51) Int. Cl.: F16K 37/00

(54) **Dispositif indicateur de l'état d'ouverture d'une vanne**

(71) Demandeur: LUXEMBOURG PATENT COMPANY S.A., 7440 Lintgen (LU)
(72) Inventeur: Devos, Didier, 6717 Attert (BE)
(74) Mandataire: Weydert, Robert

(57) **Abrégé**

La demande a trait à un dispositif indicateur d'état d'ouverture (2) d'une vanne (1) comprenant un organe de commande rotatif (4) destiné à être fixé sur la tige (3) de commande de la vanne (1) et comportant au moins une fenêtre de visualisation (5), un organe indicateur rotatif (6) disposé sous l'organe de commande rotatif (4) et apte à être vu par la fenêtre de visualisation (5), un organe (7) généralement fixe par rapport au corps de la vanne (1 ) et disposé sous l'organe indicateur rotatif (6), où l'organe de commande (4) comporte au moins une butée (8), l'organe indicateur (6) comporte une première butée (10) et une deuxième butée (9), chacune étant destinée à engager la ou, respectivement, une des butée(s) (8) de l'organe de commande (4), la deuxième butée (9) étant construite de sorte à se déplacer par rapport à l'organe indicateur (6) lorsque l'organe indicateur tourne par rapport à l'organe généralement fixe (7) afin d'engager ou de désengager la butée (8) correspondante de l'organe de commande (4).

## Description

L'invention a trait à un dispositif indicateur d'état d'ouverture d'une vanne selon le préambule de la revendication 1. Ce dispositif s'applique particulièrement aux vannes dont la tige est stationnaire selon son axe, c'est-à-dire qui ne monte et ne descend pas. Il s'applique également particulièrement aux vannes dont le volant de commande décrit plus d'un tour lors des opérations de fermeture et d'ouverture. Ce dispositif s'avère particulièrement important pour de telles vannes utilisées pour des gaz sous très haute pression et pour lesquelles une légère rotation (moins d'un quart de tour) dans le sens d'ouverture à partir de l'état fermé peut déjà correspondre à un état de fonctionnement de l'installation à laquelle la vanne est raccordée.

Le document EP 1 512 896 A1 décrit un tel dispositif prévu pour une vanne comportant plus d'un tour de volant de commande. Le volant 44 comporte une fenêtre de visualisation circulaire 80 permettant de voir un anneau indicateur 40 logé sous le volant 44 et commandé en rotation par le volant ainsi que par un élément 38 solidaire de la vanne. Les figures 5-10 de ce document montrent les positions relatives des différents éléments constitutifs de l'indicateur en fonction de l'état d'ouverture de la vanne. L'anneau de visualisation est, en principe, entrainé par le volant 44 via un élément élastique 42. Cependant la rotation de l'anneau est stoppée tous les demi-tours par deux cames 60 qui déforment l'élément élastique 42 et interrompent l'entrainement de l'anneau 42. Ce système permet la rotation du volant sur plusieurs tours sans que l'anneau de visualisation ne fasse plus d'un tour par rapport au volant.
Les figures 5-7 montrent toutefois que l'indication de fermeture reste inchangée de l'état complètement fermé jusqu'au premier demi-tour d'ouverture. Le fait de tourner d'un demi-tour le volant d'une telle vanne la met déjà en état d'ouverture partielle alors que l'indicateur signale toujours à ce moment qu'elle est fermée.

Le document US 5 806 559 décrit également un dispositif indicateur d'état d'ouverture d'une vanne. Un votant 7 comporte une fenêtre 10 permettant de voir un organe de visualisation 9 logé sous le volant et décrivant un mouvement de translation opéré par une piste en forme de sillon. Ce dispositif est adapté aux vannes dont le volant décrit plus d'un tour puisque la spirale 5a assure une démultiplication du mouvement de rotation du volant en translation de l'organe de visualisation 9.
Ce système n'offre cependant pas une indication claire de son état lorsqu'elle est légèrement ouverte, par exemple d'un demi-tour. En effet, l'organe de visualisation 9 se déplace par rapport à la fenêtre progressivement avec la rotation du volant. Une légère ouverture de la vanne se manifeste par un très petit déplacement de l'indicateur 9 et n'indique donc pas clairement qu'il y a ouverture de la vanne, si petite soit elle. De plus, le siège de la vanne va se mater au fil du temps et de l'utilisation, et la seule façon de compenser le changement de position en rotation du volant en état fermé est de modifier manuellement la position angulaire de la pièce 5 comportant le sillon.

Il apparaît donc qu'aucun des ces dispositifs connus n'assure une indication claire et fiable de l'état d'ouverture d'une vanne. L'objectif de cette invention est de pallier cette lacune, en particulier pour les vannes dont la tige décrit plus d'un tour lors des manoeuvres de l'état fermé à l'état complètement ouvert.

Cet objectif est atteint par les caractéristiques de la revendication 1. En effet, dés les premiers degrés de rotation du volant dans le sens d'ouverture à partir de l'état totalement fermé, la fenêtre de l'organe de commande va se déplacer par rapport à l'organe indicateur et découvrir ainsi une autre zone de l'indicateur, indiquant très rapidement une modification d'état de fermeture de la vanne. La butée de l'organe de commande va ensuite engager la première butée de l'organe indicateur afin de le faire tourner avec lui ne découvrant ainsi pas sa zone indiquant l'état fermé. La deuxième butée mobile de l'organe indicateur va permettre au volant de «ramener» l'organe indicateur lors de la fermeture jusqu'à un certain point de référence et la fenêtre du volant va se rapprocher progressivement de la zone indiquant la fermeture lors des derniers degrés de rotation vers la fermeture.
Les revendications dépendantes décrivent des développements de l'invention.
La figure 1 montre une vanne à siège du type multi-tours et dont la tige est immobile axialement. Le dispositif indicateur y est représenté schématiquement.
La figure 2 est une vue éclatée en perspective du dispositif indicateur.
La figure 3 est une autre vue éclatée en perspective du dispositif indicateur.
La figure 4 est une vue en coupe selon une horizontale à hauteur du rebord intérieur de l'organe indicateur 6.

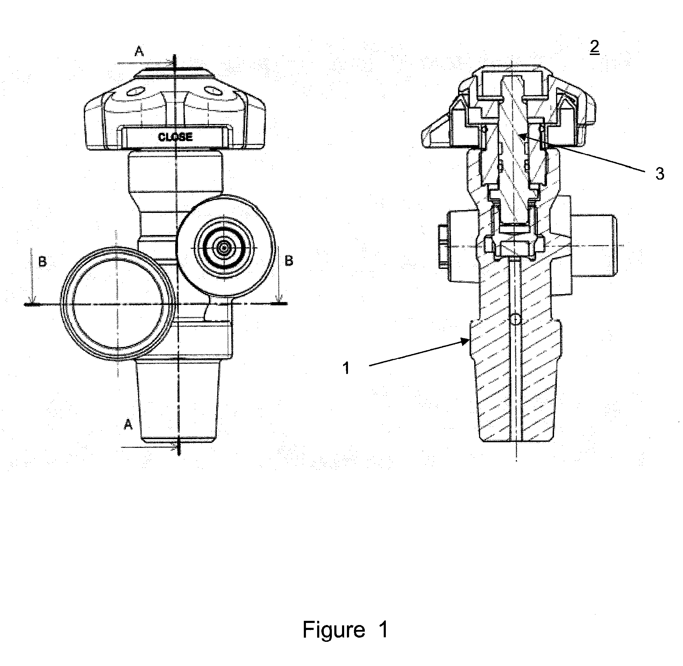

La vanne 1 représentée à la figure 1 est du type multi-tours. En particulier, sa tige de commande 3 est montée sur la vanne de sorte à pouvoir tourner sans déplacement selon son axe vertical. Elle est en prise, en rotation uniquement, avec l'élément de fermeture de la vanne. Ce dernier est pourvu à sa périphérie d'un filetage qui interagit avec un filetage solidaire du corps de vanne afin de convertir le mouvement de rotation de la tige 3 en mouvement de translation selon un axe vertical de cet élément de fermeture. C'est ce mouvement de translation qui assure l'étanchéité avec la siège de vanne 15. Un dispositif indicateur d'état d'ouverture 2 selon l'invention est représenté au sommet de la vanne 1.

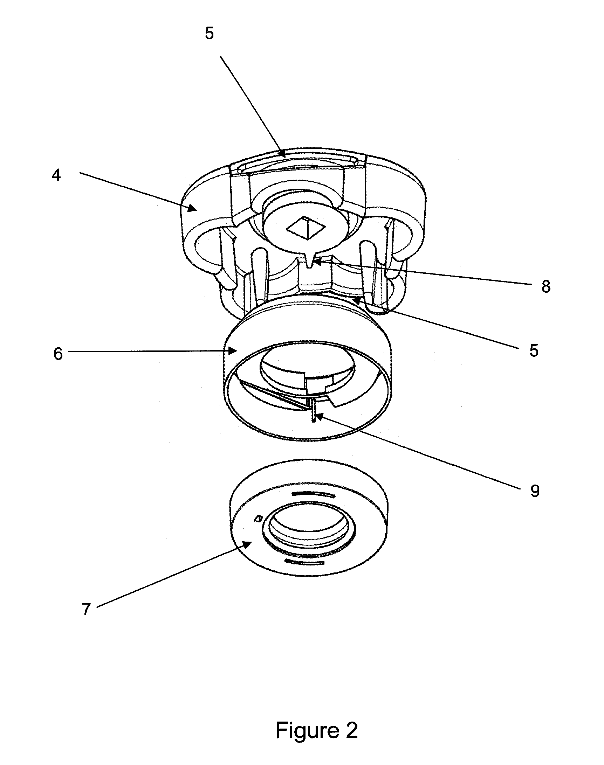

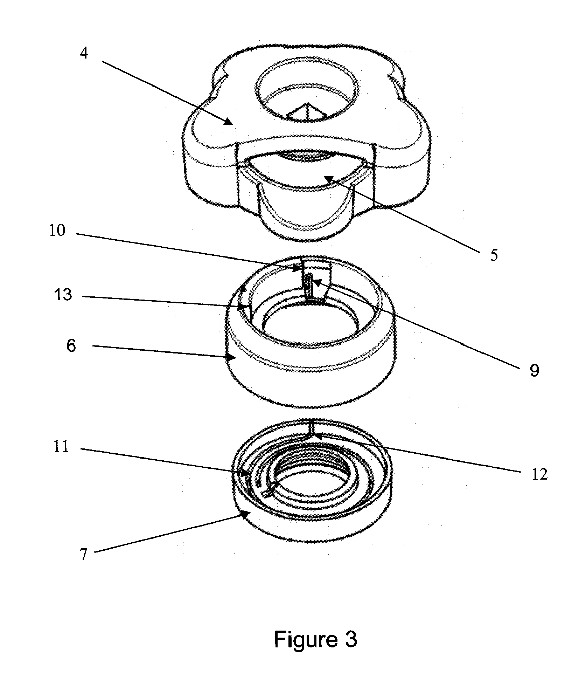

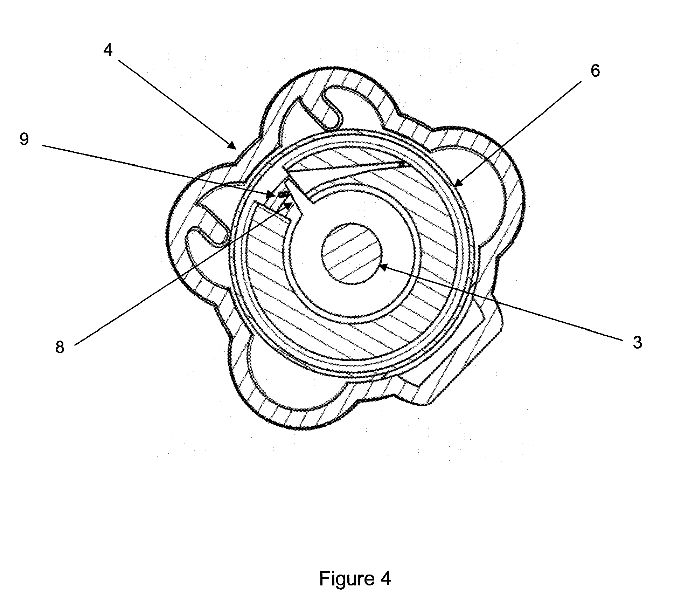

Le dispositif indicateur est représenté plus en détail aux figures 2-4. II comporte un organe de commande 4 habituellement appelé volant lié en rotation avec la tige 3. Ce volant comporte deux fenêtres 5, l'une est formée sur sa partie supérieure et l'autre sur sa partie inférieure. Cet agencement de fenêtre est purement exemplatif. On pourrait envisager une seule fenêtre ou encore plus de deux. Préférentiellement l'une au moins des fenêtres comporte une paroi transparente afin d'empêcher l'introduction de poussières et saletés dans le mécanisme logé sous le volant. Le volant comporte également une butée 8.

Sous le volant est logé un organe indicateur rotatif 6 représenté dans le cas des figures 2-4 sous forme d'un tambour. Ce tambour comporte à sa périphérie une surface destinée à la lecture de l'état de la vanne au travers au moins d'une fenêtre de lecture du volant 4. Cette surface peut être colorée de différentes teintes de sorte à visualiser par des couleurs l'état de la vanne. Elle peut également comporter des indications textuelles ou picturales ou encore une combinaison de ces différentes possibilités. La ou les zones indiquant l'état de fermeture correspondent essentiellement à la ou aux fenêtres 5 du volant 4. Une alternative consiste à prévoir une ouverture dans cette surface visible à travers l'une au moins des fenêtres du volant de sorte à découvrir sa partie intérieure qui, elle, pourrait être d'une couleur se distinguant du reste afin de permettre une visualisation aisée. Le tambour 6 comporte également deux butées, une butée fixe 10 ainsi qu'une butée mobile 9. Toutes deux interagissent avec la butée 8 du volant. Le volant 4 pourrait comporter deux butées distinctes, l'une interagissant avec la butée fixe 10 et l'autre avec la butée mobile 9 du tambour 6. La butée mobile est réalisée au moyen d'un fil métallique flexible dont une extrémité est rigidement fixée au tambour et l'autre est pliée à 90 degrés vers le haut et puis 180 degrés vers le bas de sorte à constituer la butée proprement dite. Cette extrémité constitue le lecteur qui va déplacer la butée. Ce déplacement est principalement radial.

Sous le tambour est logé un organe 7 généralement fixe avec la vanne. Cet organe est préférentiellement circulaire et comporte une piste 11 en forme de spirale qui interagit avec l'extrémité de la butée mobile 9 afin de la déplacer essentiellement radialement lorsque le tambour tourne par rapport à l'organe fixe 7. La piste comporte à son extrémité extérieure un arrêt 12 servant de «garage» au lecteur. Ce garage est constitué par une encoche verticale réalisée en bout de piste 11 dans le rebord de l'organe généralement fixe 7.

La butée mobile 9 du tambour 6 pourrait être réalisée en matière plastique préférentiellement réalisée d'un seul tenant avec le tambour 6. La piste 11 au lieu d'évoluer dans un plan horizontal pourrait évoluer verticalement de sorte à déplacer la butée mobile 9 essentiellement verticalement au lieu de radialement.

L'organe 7 est monté sur le corps de vanne de sorte à être fixe en rotation avec le corps lorsque le couple auquel il est soumis est en dessous d'une certaine limite. Au-delà de cette limite, il tourne par rapport au corps de vanne. Un tel montage est réalisé au moyen d'un joint en élastomère du type o-ring logé entre la partie supérieure de la vanne et l'organe 7. Le joint o-ring n'est qu'un exemple de réalisation et d'autres moyens sont envisageables.

### Le dispositif indicateur fonctionne de la façon suivante:

Lorsque la vanne est dans son état fermé, le volant 4, le tambour 6 et l'organe généralement fixe 7 sont disposés de sorte à ce que la ou les fenêtres 5 du volant 4 découvre(nt) la partie du tambour 6 indiquant l'état de fermeture de la vanne et le lecteur de la butée mobile 9 est engagé dans le garage 12 en bout de piste 11 de l'organe généralement fixe. Lors de l'ouverture de la vanne, le volant 4 est actionné dans le sens inverse des aiguilles d'une montre. Pendant le premier trois-quarts de tour, le tambour 6 et l'organe généralement fixe 7 restent immobiles alors que le volant tourne. La ou les zones du tambour 6 indiquant la fermeture sont cachée(s) par le volant qui a tourné. Dès les premiers degrés de rotation du volant, la ou les fenêtres du volant découvre(nt) une autre partie de la surface périphérique du tambour et indique(nt) donc très rapidement un changement d'état de la vanne. Après environ trois-quarts de tour, la butée 8 du volant 4 engage la butée fixe 10 du tambour 6 de sorte à entrainer le tambour avec le volant. C'est à ce moment que le lecteur de la butée mobile va sortir du garage 12 et suivre la piste 11 immobile. La butée mobile va se déplacer radialement vers l'axe de la vanne et va se placer en face de la butée 8 du volant. A partir de ce moment la butée 8 du volant est coincée entre la butée fixe 10 et la butée mobile 9 du tambour. Le volant 4 et le tambour 6 sont alors solidaires dans les deux sens de rotation. Le volant peut-être manipulé jusqu'à l'ouverture totale de la vanne. La piste est conçue de sorte à ce que le lecteur ne vienne pas en fin de piste lorsque la vanne est complètement ouverte. Lors de la fermeture, c'est-à-dire lorsque le volant subit une rotation dans le sens des aiguilles d'une montre, le volant 4 entraine le tambour 6 jusqu'au moment précis où la butée mobile 9 se déplaçant radialement grâce à la piste 11 engage le garage 12 et libère la butée 8 du volant. A ce moment précis, le tambour reste immobile et le volant tourne seul jusqu'à la fermeture de la vanne. La rotation relative entre le tambour et le volant permet alors au dispositif d'indiquer l'état de la vanne. Lorsque la vanne est totalement fermée, la butée 8 du volant 4 vient engager une butée 13 du tambour formée, dans ce cas précis, intégralement avec la butée fixe 10 du tambour lorsque la ou les fenêtres de visualisation découvre(nt) complètement la ou les zones du tambour indiquant l'état de fermeture. Ceci permet au volant d'entraîner le tambour et ainsi l'organe fixe lorsque la vanne est en position fermée et d'assurer ainsi une compensation du point zéro de la vanne. En effet, il est connu que la position angulaire d'une vanne à siège évolue légèrement au cours de son utilisation en raison principalement du matage des surfaces du siège de la vanne. Etant donné la grande sensibilité du présent dispositif indicateur, il est apparu utile de prévoir une compensation de cette position ou encore «point zéro». Lors de chaque fermeture de la vanne, la butée 8 du volant vient en contact avec une butée fixe 13 du tambour 6. Le lecteur de la butée mobile 9 est engagée dans le garage 12 de l'organe généralement fixe, si bien qu'une légère rotation du volant au-delà de sa position zéro précédente va entrainer le tambour ainsi que l'organe généralement fixe compensant ainsi le nouveau point zéro. Il est vrai que c'est à la fermeture de la vanne que la personne la manipulant va exercer le couple maximum. Ceci permettra ainsi la rotation éventuelle de l'organe généralement fixe sans que l'utilisateur perçoive la moindre anomalie.

## Revendications

1. Dispositif indicateur d'état d'ouverture (2) d'une vanne (1) comprenant:
- un organe de commande rotatif (4) destiné à être fixé sur la tige (3) de commande de la vanne (1) et comportant au moins une fenêtre de visualisation (5),
- un organe indicateur rotatif (6) disposé sous l'organe de commande rotatif (4) et apte à être vu par la fenêtre de visualisation (5),
- un organe (7) généralement fixe par rapport au corps de la vanne (1) et disposé sous l'organe indicateur rotatif (6),
**caractérisé en ce que**
- l'organe de commande (4) comporte au moins une butée (8),
- l'organe indicateur (6) comporte une première butée (10) et une deuxième butée (9), chacune étant destinée à engager la ou, respectivement, une des butée(s) (8) de l'organe de commande (4), la deuxième butée (9) étant construite de sorte à se déplacer par rapport à l'organe indicateur (6) lorsque l'organe indicateur tourne par rapport à l'organe généralement fixe (7) afin d'engager ou de désengager la butée (8) correspondante de l'organe de commande (4).

2. Dispositif selon la revendication 1, **caractérisé en ce que**
l'organe généralement (7) fixe interagit avec la deuxième butée (9) de sorte à la déplacer lors de la rotation de l'organe indicateur (6).

3. Dispositif selon la revendication 2, **caractérisé en ce que**
l'organe généralement fixe (7) comporte une piste (11) servant à déplacer, préférentiellement radialement ou verticalement, la deuxième butée (9) lors de la rotation de l'organe indicateur (6).

4. Dispositif selon la revendication 3, **caractérisé en ce que**
la piste (11) est en forme de spirale autour de l'axe de la tige de vanne (3).

5. Dispositif selon l'une des revendications précédentes, **caractérisé en ce que**
la deuxième butée (9) décrit un mouvement relatif par rapport à l'organe indicateur (9) essentiellement radial ou vertical.

6. Dispositif selon l'une des revendications précédentes, **caractérisé en ce que**
la deuxième butée (9) est un élément flexible préférentiellement dans un plan perpendiculaire à la tige de vanne (3) et dont une extrémité est rigidement lié à l'organe indicateur (6).

7. Dispositif selon la revendication 3 ou 4, **caractérisé en ce que**
la deuxième butée (9) est engagée dans la piste (11) et la piste comporte un arrêt (12) à l'une des ses extrémités de sorte à ce que la deuxième butée (9) puisse engager ledit arrêt (12) et faire tourner l'organe généralement fixe (7) lorsque l'organe de commande (4) est manipulé dans le sens de la fermeture et que sa ou une des ses butée(s) (8) engage une troisième butée (13) de l'organe de visualisation (6).

8. Dispositif selon la revendication 7, **caractérisé en ce que**
la troisième butée (13) de l'organe de visualisation est formée avec la première butée (10).

9. Dispositif selon l'une des revendications précédentes, **caractérisé en ce que**
l'organe généralement fixe (7) peut tourner par rapport à la vanne lorsqu'il est soumis à un couple supérieur à une valeur déterminée.

10. Dispositif selon l'une des revendications précédentes, **caractérisé en ce que**
l'organe de visualisation (6) comporte une zone visible au travers de la fenêtre (5) de l'organe de commande (4) lorsque la vanne (1) est fermée qui est distincte de la zone visible au travers de la fenêtre lorsque la vanne n'est pas fermée.

11. Dispositif selon la revendication 10, **caractérisé en ce que**
la zone visible de l'organe de visualisation (6) est constituée par une ouverture laissant apparaître l'organe généralement fixe (7) lorsque la vanne est complètement fermée.

12. Dispositif selon l'une des revendications précédentes, **caractérisé en ce que**
l'organe de commande (4) comporte deux butées, l'un interagissant avec la première butée (10) de l'organe indicateur (6) et l'autre interagissant avec la deuxième butée (9) de l'organe indicateur (6).

13. Vanne comprenant un dispositif indicateur selon l'une des revendications précédentes.
